# EUROPÄISCHE PATENTSCHRIFT

(11) **EP 1 380 453 B1**
(45) Veröffentlichungstag und Bekanntmachung des Hinweises auf die Patenterteilung: **21.11.2007**
(21) Anmeldenummer: 03008529.4
(22) Anmeldetag: 12.04.2003
(51) Int. Cl.: B60G 17/052

(54) **Geschlossene Niveauregelanlage mit zwei Druckspeichern für Fahrzeuge**
Closed level control system comprising two pressurized air supply vessels for vehicles
Systeme regulateur de niveau du type fermé avec deux reservoirs d'air comprimé pour vehicule

(30) Priorität: 11.07.2002 DE 10231251
(43) Veröffentlichungstag der Anmeldung: 14.01.2004
(73) Patentinhaber: Continental Aktiengesellschaft, 30165 Hannover (DE)
(72) Erfinder: Folchert, Uwe, Dr., 31867 Lauenau (DE)

(56) Entgegenhaltungen:
- EP-A- 1 106 402
- EP-A- 1 243 447
- DE-A- 10 055 108
- US-A- 4 834 418
- PATENT ABSTRACTS OF JAPAN vol. 013, no. 535 (M-899), 29. November 1989 (1989-11-29) & JP 01 218911 A (KAYABA IND CO LTD), 1. September 1989 (1989-09-01)

## Beschreibung

Die Erfindung betrifft gemäß dem Oberbegriff des Anspruchs 1 eine geschlossene Niveauregelanlage für Fahrzeuge, durch die ein Fahrzeugaufbau gegenüber mindestens einer Fahrzeugachse abgefedert ist.

Eine geschlossene Niveauregelanlage für Fahrzeuge der eingangs genannten Art ist aus der nachveröffentlichten europäischen Patentanmeldung EP 1 243 447 A bekannt. Die aus dieser Druckschrift bekannte geschlossene Niveauregeleinrichtung weist zwei oder vier steuerbare Wegeventile, einen Druckmittelvorratsbehälter und mindestens zwei Druckmittelkammern mit jeweils einem steuerbaren Wegeventil auf. Mit dieser Niveauregelanlage kann Druckmittel aus den Druckmittelkammern in den Druckmittelvorratsbehälter und umgekehrt überführt werden. Weiterhin kann Luft aus der Atmosphäre in den Druckmittelvorratsbehälter überführt werden, wobei die verdichtete Luft vor dem Eintritt in den Druckmittelvorratsbehälter in einem Lufttrockner getrocknet wird. Zur Regeneration des Lufttrockners kann Druckmittel aus dem Druckmittelvorratsbehälter über eine Drossel entspannt und im Vergleich zur Lufttrocknung in entgegengesetzter Richtung durch den Lufttrockner über ein Ablassventil zur Atmosphäre geführt werden. Mit dieser Niveauregelanlage lassen sich keine sprunghaft unterschiedlichen Regelgeschwindigkeiten erzielen, wie diese für bestimmte Anwendungszwecke wünschenswert und erforderlich sind.

Weiterhin ist aus der US-Druckschrift US4834418 eine geschlossene Niveauregelanlage für Fahrzeuge bekannt, welche einen Kompressor, einen Lufttrockner, ein Ansaugventil, ein Ablassventil, zwei Niederdruck- und zwei Hochdruck-Druckmittelvorratsbehälter aufweist. Die Niederdruck- und Hochdruck-Druckmittelvorratsbehälter stehen jeweils über ein steuerbares Wegeventil mit dem Kompressoreingang oder dem Kompressorausgang in Verbindung. Ebenso stehen Druckmittelkammern über steuerbare Wegeventile mit dem Kompressoreingang oder dem Kompressorausgang in Verbindung. Die Druckmittelkammern können ohne eine Verbindung zum Komrpessor mit den Niederdruck- oder den Hochdruck-Druckmittelvorratsbehältern über steuerbare Wegeventile in Verbindung gebracht werden, so dass Druckmittel entsprechend dem Druckgefälle ausgetauscht werden kann. Mit der Niveauregelanlage kann Druckmittel aus den Niederdruck-Druckmittelvorratsbehältern oder den Druckmittelkammern vom Kompressor in die Hochdruck-Druckmittelvorratsbehälter überführt werden. Ein überführen von Druckmittel aus dem Hochdruck-Druckmittelvorratsbehälter in die Niederdruck-Druckmittelvorratsbehälter oder die Druckmittelkammern mit dem Kompressor ist trotz des komplexen Aufbaus mit vielen steuerbaren Wegeventilen nicht möglich.

Aufgabe der Erfindung ist es, eine geschlossene Niveauregelanlage für Fahrzeuge zu schaffen, welche einen einfachen Aufbau aufweist, einen geringen Bauraum beansprucht und sprunghaft unterschiedliche Regelgeschwindigkeiten zulässt.

Die Aufgabe wird erfindungsgemäß durch die Merkmale des Anspruchs 1 gelöst. Der Druckmittelvorratsbehälter ist in einen ersten und einen zweiten Druckmittelraum unterteilt, welche keine direkte Verbindung aufweisen, wobei entweder der erste Druckmittelraum oder der zweite Druckmittelraum über mindestens ein gemeinsames und steuerbares Wegeventil mit dem Kompressoreingang oder dem Kompressorausgang verbindbar ist, so dass Druckmittel aus den Druckmittelkammern in den ersten oder den zweiten Druckmittelraum oder Druckmittel aus dem ersten oder dem zweiten Druckmittelraum in die Druckmittelkammern überführbar ist.

Ein Vorteil der Erfindung ist darin zu sehen, dass nur sehr wenige steuerbare Wegeventile benötigt werden, wodurch Bauraum und Kosten gespart werden. Ein weiterer Vorteil der Erfindung ist, dass der Kompressor Druckmittel aus den Druckmittelkammern in die Druckmittelräume und umgekehrt überführen kann. Damit lassen sich schnelle Regelgeschwindigkeiten beim Auf- und Abregeln der Niveauregelanlage erreichen. Ein weiterer Vorteil der Erfindung ist, dass in den Druckmittelkammern ein höherer Druck als der tatsächliche Verdichtungsenddruck des Kompressors erzeugt werden kann, da der Kompressor vorverdichtetes Druckmittel aus einem der beiden Druckmittelräume ansaugen und in die Druckmittelkammern überführen kann. Der Kompressor kann daher kleiner dimensioniert werden, um den Maximaldruck in den Druckmittelkammern erzeugen zu können, womit sich Bauraum sparen lässt. Ein weiterer Vorteil ist, das bei einem leckgeschlagenen Druckmittelraum, welcher dann Atmosphärendruck aufweist, immer noch ein Aufregelvorgang mit dem Druckmittel in dem anderen Druckmittelraum durchgeführt werden kann.

Gemäß einer Weiterbildung der Erfindung nach Anspruch 2 ist vorgesehen, dass die geschlossene Niveauregelanlage zumindest drei steuerbare Wegeventile aufweist, von denen jedes zumindest zwei Schaltzustände einnehmen kann. Die erste Druckluftleitung wird mit dem ersten steuerbaren Wegeventil und die zweite Druckluftleitung mit dem zweiten steuerbaren Wegeventil durchgeschaltet und die vierte Druckluftleitung wird mit dem ersten steuerbaren Wegeventil und die dritte Druckluftleitung mit dem zweiten steuerbaren Wegeventil gesperrt, wenn Druckluft von einer der beiden Druckmittelräume in eine Druckmittelkammer überführt werden soll, wobei sich das erste und das zweite steuerbare Wegeventil dann in einem ersten Schaltzustand befinden. Die dritte Druckluftleitung wird mit dem zweiten steuerbaren Wegeventil und die vierte Druckluftleitung mit dem ersten steuerbaren Wegeventil durchgeschaltet und die erste Druckluftleitung wird mit dem ersten steuerbaren Wegeventil und die zweite Druckluftleitung mit dem zweiten steuerbaren Wegeventil gesperrt, wenn Druckluft von einer Druckmittelkammer in eine der beiden Druckmittelräume überführt werden soll, wobei sich das erste und das zweite steuerbare Wegeventil dann in einem zweiten Schaltzustand befinden. Eine Verbindung von dem ersten steuerbaren Wegeventil zu dem ersten Druckmittelraum wird hergestellt, wenn sich das dritte Wegeventil in seinem ersten Schaltzustand befindet, und eine Verbindung von dem ersten steuerbaren Wegeventil zu dem zweiten Druckmittelraum wird hergestellt, wenn sich das dritte Wegeventil in seinem zweiten Schaltzustand befindet.

Der Vorteil der Weiterbildung der Erfindung nach Anspruch 2 ist darin zu sehen, dass günstige Standard-Wegeventile verwendet werden können, um den Kompressoreingang bzw -ausgang mit den Druckmittelkammern bzw. den Druckmittelräumen zu verbinden.

Gemäß einer Weiterbildung der Erfindung nach Anspruch 3 ist vorgesehen, dass in der ersten Druckluftleitung zwischen einem gemeinsamen Punkt, welcher die erste und die dritte Druckluftleitung mit dem Kompressoreingang verbindet, und dem ersten steuerbaren Wegeventil mit dem die erste Druckluftleitung durchschaltbar ist, ein zum Kompressoreingang hin öffnendes Rückschlagventil liegt, und dass in der dritten Druckluftleitung zwischen dem gemeinsamen Punkt und dem zweiten steuerbaren Wegeventil, mit dem die dritte Druckluftleitung durchschaltbar ist, ein weiteres zum Kompressoreingang hin öffnendes Rückschlagventil liegt.

Der Vorteil der Weiterbildung der Erfindung ist darin zu sehen, dass in einer bestimmten Stellung des ersten und des zweiten Wegeventiles ein Überströmen von Druckmittel aus den Druckmittelkammern in den dann vom dritten Wegeventil durchgeschalteten Druckmittelraum unmöglich ist, und zwar unabhängig davon, ob der Luftdruck in den Druckmittelkammern größer oder kleiner als der Luftdruck in dem durchgeschalteten Druckmittelraum ist. Im Ruhezustand der Niveauregelanlage, wenn also keine Regelung erfolgt, können die steuerbaren Wegeventile beispielsweise in diese Stellung überführt werden, so dass ein unbeabsichtigtes Überströmen von Druckmittel zwischen den Druckmittelkammern und dem durchgeschalteten Druckmittelraum nicht stattfinden kann. Darüber hinaus wird in diesem definierten Zustand der steuerbaren Wegeventile eine Druckmessung in den Druckmittelkammern mit Hilfe eines Drucksensors auf einfache Art und Weise möglich.

Ein weiterer Vorteil der Weiterbildung der Erfindung ist, dass das dritte steuerbare Wegeventil im Ruhezustand der Niveauregelanlage so geschaltet werden kann, das der Druckmittelraum mit dem höheren Druckniveau, welcher vorzugsweise höher als das Druckniveau in den Druckmittelkammern ist, mit dem Kompressoreingang in Verbindung steht, so dass keine Druckluft aus den Druckmittelkammern in diesen Druckmittelraum überströmen kann. Vorzugsweise befindet dabei sich das zweite steuerbare Wegeventil in seiner zweiten Schaltstellung, so dass kein Druckmittel aus den Druckmittelkammern in den Kompressor oder den Lufttrockner überströmen kann.

Gemäß einer Weiterbildung der Erfindung nach Anspruch 4 ist vorgesehen, dass die zwei Druckmittelräume durch zwei separate Druckmittelvorratsbehälter gebildet werden. Der Vorteil dieser Weiterbildung der Erfindung ist, dass die beiden Druckmittelvorratsbehälter kleiner ausgeführt werden können und in kleine vorhandene Bauraumlücken an unterschiedlichen Stellen im Fahrzeug untergebracht werden können.

Gemäß einer Weiterbildung der Erfindung nach Anspruch 5 ist vorgesehen, dass die Druckmittelräume ein unterschiedliches Druckniveau aufweisen und somit mindestens ein Niederdruck- und ein Hochdruck-Druckmittelvorratsbehälter vorhanden sind. Ein Vorteil der Weiterbildung der Erfindung ist, dass sehr unterschiedliche Regelgeschwindigkeiten möglich sind, indem der Kompressoreingang entweder mit dem Niederdruck- oder dem Hochdruck-Druckmittelvorratsbehälter verbunden wird, um Druckmittel in die Druckmittelkammern zu überführen oder umgekehrt. Aufgrund des stark unterschiedlichen Druckniveaus in dem Niederdruck- und dem Hochdruck-Druckmittelvorratsbehälter ergeben sich quasi automatisch unterschiedliche Regelgeschwindigkeiten. Man erhält zwei weitere Regelgeschwindigkeitsniveaus, wenn man die Druckmittelkammern mit dem Niederdruck- oder dem Hochdruck-Druckmittelvorratsbehälter verbindet ohne den Kompressor zu betreiben. Betrachtet man zusätzlich die Regelgeschwindigkeitsniveaus, wenn man Luft aus der Atmosphäre durch den Lufteinlass ansaugt und über den Kompressor in die Druckmittelkammern verdichtet oder Druckmittel aus den Druckmittelkammern in die Atmosphäre durch den Auslass ablässt, dann lassen sich auf einfache Art und Weise jeweils vier Regelgeschwindigkeiten für das Auf- und das Abregeln der Niveauregelanlage darstellen.

Gemäß einer Weiterbildung der Erfindung nach Anspruch 6 ist vorgesehen, dass der Druck in mindestens einem der beiden Druckmittelräume höher als der tatsächliche maximale Verdichtungsenddruck des Kompressors ist. Ein Vorteil dieser Weiterbildung der Erfindung ist, dass der Kompressor kleiner dimensioniert werden kann und damit weniger Bauraum benötigt. Ein weiterer Vorteil ist, dass mit dem höheren Druckniveau andere und verbesserte Eigenschaften der Niveauregelanlage erreicht werden, wie schnellere Regelgeschwindigkeiten oder spezifische Federraten der Druckmittelräume.

Gemäß einer Weiterbildung der Erfindung nach Anspruch 7 ist vorgesehen, dass der Druck in mindestens einem der beiden Druckmittelräume für Regelungen von externen Geräten - insbesondere Reifenbefüllvorrichtungen - verwendbar ist, und der Restdruck in dem anderen Druckmittelraum für eine direkt nach dem externen Regelvorgang durchzuführende Niveauänderung der Niveauregelanlage zur Verfügung steht. Der Vorteil dieser Weiterbildung ist darin zu sehen, dass eine - insbesondere schnelle - Niveauregelung auch direkt nach einem externen Regelvorgang möglich ist und keine Stillstandszeit in Form von einer Kompressorabkühlphase notwendig ist oder eine Befüllung eines Druckmittelvorratsbehälters mit Druckmittel vor dem eigentlichen Niveauregelvorgang durchzuführen ist. Ein weiterer Vorteil dieser Weiterbildung der Erfindung ist, dass externe Regelungen aus einem Druckmittelvorratsbehälter über den Kompressor schnell durchgeführt werden können.

Gemäß dem Verfahren nach Anspruch 8 ist vorgesehen, dass der Kompressor bei der Befüllung des Druckmittelraumes, welcher einen höheren Druck als den tatsächlichen Verdichtungsenddruck des Kompressors aufweist, Druckmittel aus den Druckmittelkammern in diesen Druckmittelraum überführt. Ein Vorteil des erfindungsgemäßen Verfahrens ist, dass in der Niveauregelanlage - insbesondere in mindestens einem der Druckmittelräume - ein höheres Druckniveau möglich ist, ohne den Kompressor in seiner Größe entsprechend diesem hohem Druckniveau zu dimensionieren. Damit lässt sich Bauraum einsparen. Ein weiterer Vorteil ist, dass mit dem höheren Druckniveau andere und verbesserte Eigenschaften der Niveauregelanlage erreicht werden, wie schnellere Regelgeschwindigkeiten oder spezifische Federraten der Druckmittelräume.

Gemäß dem Verfahren nach Anspruch 9 ist vorgesehen, dass Druckmittel aus dem Lufttrockner sequentiell in den ersten oder den zweiten Druckmittelraum, welcher einen Druck höher als den tatsächlichen Verdichtungsenddruck des Kompressors aufweist, überführbar ist, wobei der Kompressor sequentiell Druckmittel aus dem zweiten oder dem ersten, nicht zu befüllenden Druckmittelraum ansaugt und in den Lufttrockner überführt, wenn der erste oder der zweite Druckmittelraum nicht mit dem Lufttrockner in Verbindung steht bzw. kein Druckmittel aus dem Lufttrockner in den ersten oder den zweiten Druckmittelraum überführt wird.

Der Vorteil des erfindungsgemäßen Verfahrens ist darin zu sehen, dass jederzeit, das heisst auch während der Fahrt, wenn kein Niveauregelvorgang notwendig oder erwünscht ist, zumindest ein Druckmittelvorratsbehälter mit einem Druck befüllbar ist, welcher höher als der Verdichtungsenddruck des Kompressors ist. Die Druckmittelkammern werden dabei nicht befüllt, so dass kein eventuell unerwünschter Niveauregelvorgang ausgeführt wird. Damit wird beispielsweise die Erhöhung des Niveaus eines Fahrzeuges gegenüber der Fahrbahn während einer Autobahnfahrt ausgeschlossen, was unter Umständen die Fahreigenschaften des Fahrzeuges unerlaubt verändern würde und zu einer Gefährdung der Fahrzeuginsassen führen könnte.

Ausführungsbeispiele und weitere Vorteile der Erfindung werden im Zusammenhang mit den nachstehenden Figuren erläutert, darin zeigen:
- Fig. 1: Ein pneumatisches Schaltschema einer geschlossenen Niveauregelanlage
- Fig.2: Ein pneumatisches Schaltschema einer geschlossenen Niveauregelanlage

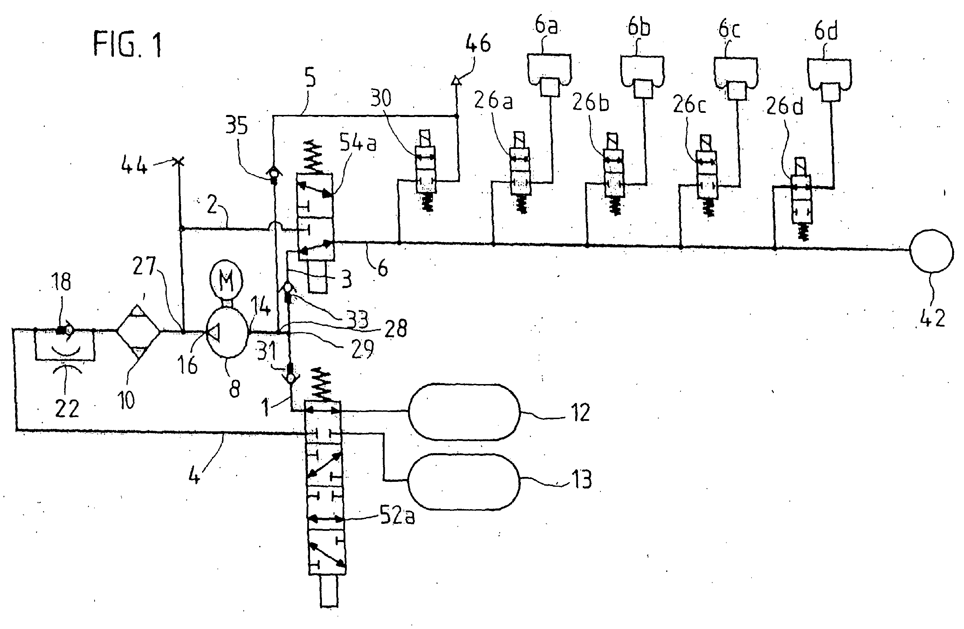

Fig. 1 zeig eine geschlossene Niveauregelanlage in schematischer Darstellung, die Druckmittelkammern in Form von Luftfedern 6a-6d, einen Kompressor 8, einen Lufttrockner 10 und zwei Druckmittelvorratsbehälter 12, 13 enthält. Der erste Druckmittelvorratsbehälter 12 und der zweite Druckmittelvorratsbehälter 13 stehen wechselweise über ein erstes steuerbares Wegeventil 52a über eine erste Druckmittelleitung 1 mit dem Kompressoreingang 14 oder über eine vierte Druckmittelleitung 4 mit dem Kompressorausgang 16 in Verbindung. Das erste Wegeventil 52a in einer ersten Schaltstellung die erste Druckmittelleitung 1 mit dem ersten Druckmittelvorratsbehälter 12 und sperrt die vierte Druckmittelleitung 4 und den zweiten Druckmittelvorratsbehälter 13. In einer zweiten Schaltstellung verbindet das erste Wegeventil 52a die vierte Druckmittelleitung 4 mit dem ersten Druckmittelvorratsbehälter 12 und sperrt die erste Druckmittelleitung 1 und den zweiten Druckmittelvorratsbehälter 13. In einer dritten Schaltstellung verbindet das erste Wegeventil 52a die vierte Druckmittelleitung 4 mit dem zweiten Druckmittelvorratsbehälter 13 und sperrt die erste Druckmittelleitung 1 und den ersten Druckmittelvorratsbehälter 12. In einer vierten Schaltstellung verbindet das erste Wegeventil 52a die erste Druckmittelleitung 1 mit dem zweiten Druckmittelvorratsbehälter 13 und sperrt die vierte Druckmittelleitung 4 und den ersten Druckmittelvorratsbehälter 12.

In der vierten Druckmittelleitung 4 ist zwischen dem ersten Wegeventil 52a und dem Kompressorausgang 16 ein Lufttrockner 10 angeordnet. Eine Drossel 22 und parallel dazu ein zum ersten Wegeventil 52a hin öffnendes Rückschlagventil 18 sind zwischen dem Lufttrockner 10 und dem ersten Wegeventil 52a angeordnet. Zwischen dem Kompressorausgang 16 und dem Lufttrockner 10 zweigt von der vierten Druckmittelleitung 4 in einem Punkt 27 eine zweite Druckmittelleitung 2 ab, welche zu einem externen Geräteanschluß 44, welcher nur geöffnet ist, wenn ein externes Gerät angeschlossen ist, und einem zweiten steuerbaren Wegeventil 54a führt. Das zweite Wegeventil 54a verbindet in einer ersten Schaltstellung die zweite Druckmittelleitung 2 mit der sechsten Druckmittelleitung 6 und sperrt dabei eine Verbindung zu einer dritten Druckmittelleitung 3. In einer zweiten Schaltstellung des zweiten Wegeventiles 54a wird die sechste Druckmittelleitung 6 mit der dritten Druckmittelleitung 3 verbunden und der Anschluß der zweiten Druckmittelleitung 2 gesperrt.

Die dritte Druckmittelleitung 3 ist in einem gemeinsamen Punkt 29 mit der ersten Druckmittelleitung 1 verbunden. Dazwischen liegt ein zum Punkt 29 hin öffnendes Rückschlagventil 33. Ebenso liegt zwischen dem ersten Wegeventil 52a und dem Punkt 29 ein zum Punkt 29 hin öffnendes Rückschlagventil 31. Der Punkt 29 steht über die erste Druckmittelleitung 1 mit dem Kompressoreingang 14 in Verbindung, wobei dazwischen eine fünfte Druckmittelleitung 5 in einem Punkt 28 abzweigt. Die fünfte Druckmittelleitung 5 verbindet den Punkt 28 und den Lufteinlass / Luftauslass 46, wobei dazwischen ein zum Lufteinlass / Luftauslass 46 hin schließendes Rückschlagventil 35 angeordnet ist. Der Lufteinlass / Luftauslass 46 ist weiterhin mit dem steuerbaren Wegeventil 30 verbunden. In einer ersten Schaltstellung des Wegeventiles 30 wird eine Verbindung zwischen dem Lufteinlass / Luftauslass 46 und der sechsten Druckmittelleitung 6 gesperrt und in einer zweiten Schaltstellung durchgeschaltet. Mit der sechsten Druckmittelleitung 6 sind weiterhin ein Drucksensor 42 und die steuerbaren Wegeventile 26a-26d verbunden, welche in einer ersten Schaltstellung eine Verbindung zu den Druckmittelkammern 6a-6d sperren und in einer zweiten Schaltstellung durchschalten.

Im Folgenden werden die Funktionen der Niveauregelanlage gemäß Fig.1 erläutert. Zum Überführen von Druckmittel in den ersten Druckmittelvorratsbehälter aus der Druckmittelkammer 6a werden zunächst die steuerbaren Wegeventile 26a, 52a und 54a in den ihren zweiten Schaltzustand überführt. Die Luftfeder 6a ist dann über die Druckluftleitung 3, in der die durchgeschalteten Wegeventile 26a und 54a und das Rückschlagventil 33 liegen, mit dem Kompressoreingang 14 verbunden. Der Kompressorausgang 16 ist über die Druckluftleitung 4, in der der Lufttrockner 10, das Rückschlagventil 18 und das durchgeschaltete Wegeventil 52a liegen, verbunden. Die Luft kann also ausgehend von der Luftfeder 6a mit Hilfe des Kompressors 8 in den Drucklmittelvorratsbehälter 12 überführt werden. Während dieses Vorganges ist die Druckluftleitung 2 durch das steuerbare Wegeventil 54a und die Druckluftleitung 1 sowie der Druckmittelvorratsbehälter 13 durch das steuerbare Wegeventil 52a gesperrt. Zur Beendigung des Vorganges wird zumindest das steuerbare Wegeventil 26a wieder in den ersten Schaltzustand überführt. Für die Luftfedern 6b bis 6d wird entsprechend vorgegangen, mit dem Unterschied, dass die steuerbaren Wegeventile 26b bis 26d entsprechende Schaltstellungen einnehmen. Für den zweiten Druckmittelvorratsbehälter 13 gilt entsprechendes, wobei das erste Wegeventil 52a dann in die dritte Schaltstellung überführt wird.

Zum Überführen von Druckluft aus dem ersten Druckmittelvorratsbehälter 12 in die Druckmittelkammer 6a wird zunächst das steuerbare Wegeventil 26a in den ersten Schaltzustand überführt. Die Wegeventile 52a und 54a verbleiben in der ersten Schaltstellung. Der erste Druckmittelvorratsbehälter 12 ist dann über die Druckluftleitung 1, in der das steuerbare Wegeventil 52a und das Rückschlagventil 31 liegen, mit dem Kompressoreingang 14 verbunden. Der Kompressorausgang 16 ist über die Druckmittelleitung 2, in der das steuerbare Wegeventil 54a und das durchgeschaltete steuerbare Wegeventil 26a liegen, mit der Luftfeder 6a verbunden. Es kann also Druckmittel von dem Druckmittelvorratsbehälter 12 über den Kompressor 8 in die Druckmittelkammer 6a überführt werden. Während dieses Vorganges ist die Druckmittelleitung 3 durch das steuerbare Wegeventil 54a und die Druckluftleitung 4 sowie der Druckmittelvorratsbehälter 13 durch das steuerbare Wegeventil 52a gesperrt. Zur Beendigung des Vorganges wird zumindest das steuerbare Wegeventil 26a wieder in ersten Schaltzustand überführt. Die Luftfedern 6b bis 6d werden auf entsprechende Art und Weise mit Druckmittel aus dem Druckmittelvorratsbehälter 12 befüllt. Für den zweiten Druckmittelvorratsbehälter 13 gilt entsprechendes, wobei das erste Wegeventil 52a dann in die vierte Schaltstellung überführt wird.

Zum Auffüllen des ersten Druckmittelvorratsbehälters 12 mit Luft aus der Atmosphäre werden zunächst die steuerbaren Wegeventile 30, 52a und 54a in den zweiten Schaltzustand überführt. Die Atmosphäre ist dann über das steuerbare Wegeventil 30, das steuerbare Wegeventil 54a und das Rückschlagventil 33 mit dem Kompressoreingang 14 verbunden. Der Kompressorausgang 16 ist über die Druckmittelleitung 4, in der der Lufttrockner 10, das Rückschlagventil 18 und das durchgeschaltete steuerbare Wegeventil 52a liegt, mit dem Druckmittelvorratsbehälter 12 verbunden, so dass ein Auffüllen des Druckmittelvorratsbehälter 12 mit Hilfe des Kompressors 8 mit Luft aus der Atmosphäre möglich ist. Während dieses Vorganges ist die Druckluftleitung 2 durch das steuerbare Wegeventil 54a und die Druckmittelleitung 1 sowie der Druckmittelvorratsbehälter 13 durch das steuerbare Wegeventil 52a gesperrt. Zur Beendigung des Vorganges wird zumindest das steuerbare Wegeventil 30 wieder in den ersten Schaltzustand überführt. Ebenso ist ein Ansaugen von Luft aus der Atmosphäre über die mit dem Lufteinlass / Luftauslass 46 verbundene fünfte Druckmittelleitung 5 und das Rückschlagventil 35 zum Kompressoreingang 14 hin möglich, wobei dann nur das erste Wegeventil 52a in der zweiten Schaltstellung die vierte Druckmittelleitung mit dem Druckmittelvorratsbehälter 12 verbindet. Für den zweiten Druckmittelvorratsbehälter 13 gilt entsprechendes, wobei das erste Wegeventil 52a dann in die dritte Schaltstellung überführt wird.

Zum Ablassen von Druckluft aus dem ersten Druckmittelvorratsbehälter 12 in die Atmosphäre 30 werden zunächst die steuerbaren Wegeventil 52a und 30 in den zweiten Schaltzustand überführt. Der erste Druckmittelvorratsbehälter 12 ist dann über das steuerbare Wegeventil 52a, die Drossel 22, den Lufttrockner 10, das steuerbare Wegeventil 54a und das steuerbare Wegeventil 30 mit der Atmosphäre verbunden, so dass Druckmittel aus dem ersten Druckluftvorratsbehälter 12 in diese strömen kann. Hierbei wird die Druckluft über der Drossel entspannt und in Gegenrichtung durch den Lufttrockner 10 geführt, so dass dieser regeneriert werden kann. Für den zweiten Druckmittelvorratsbehälter 13 gilt entsprechendes, wobei das erste Wegeventil 52a dann in die dritte Schaltstellung überführt wird.

Wie oben gezeigt kann Druckmittel zwischen den Druckmittelvorratsbehältern 12, 13 und den Druckmittelkammern 6a bis 6d über den Kompressor 8 ausgetauscht werden. Weiterhin ist es mit der erfindungsgemäßen Niveauregelanlage möglich ein höheres Druckniveau in den Druckmittelvörratsbehältern 12, 13 zu erzeugen, als der tatsächliche Verdichtungsenddruck Kompressor 8 ist, welcher vom theoretischen Verdichtungsverhältnis abzüglich der Verdichtungsverluste abhängig ist. Beispielsweise weist der Kompressors 8 eintheoretisches Verdichtungsverhältnis von zwanzig auf, wobei abzüglich der Verdichtungsverluste, wie Undichtigkeiten, Schadraum, thermische Verluste, ein tatsächlicher Verdichtungsenddruck von ca. 18 bar erreicht wird. Trotzdem ist es mit eben diesem Kompressor 8 in der erfindungsgemäßen Niveauregelanlage möglich, beispielsweise einen Druck von ca. 30 bar in einem der beiden Druckmittelvorratsbehälter 12, 13 zu erzeugen.

Erreicht wird das hohe Druckniveau in dem entsprechenden Druckmittelvorratsbehälter 12, 13 dadurch, das beispielsweise beide Druckmittelvorratsbehälter 12, 13 von dem Kompressor 8 mit Druckluft, welche aus der Atmosphäre über den Lufteinlass / Luftauslass 46 angesaugt wird, bis zum maximal möglichen Verdichtungsenddruck des Kompressors 8 vorbefüllt werden. Diese vorverdichtete Druckluft wird in eine oder mehrere Druckmittelkammern 6a bis 6d überführt und weiter verdichtet, so dass das Druckniveau weiter ansteigt und gegebenenfalls über den maximalen Verdichtungsenddruck des Kompressors 8 ansteigt. Diese Druckluft aus der oder den entsprechenden Druckmittelkammer 6a bis 6d wird von dem Kompressor 8 in einen Druckmittelvorratsbehälter 12, 13 überführt, welcher bereits vorbefüllt ist, so dass der Druck in diesem Druckmittelvorratsbehälter 12, 13 am Ende des Verdichtungsvorganges oberhalb des maximalen Verdichtungsenddruckes des Kompressors 8 liegt. Ein Kompressor, welcher in einer einstufigen oder mehrstufigen Verdichtung diesen hohen maximalen Verdichtungsenddruck von beispielsweise 30 bar erreichen sollte, würde gegenüber dem verwendeten Kompressor 8 wesentlich größer und komplexer bauen.

Die obigen Ausführungen zeigen, dass die bisher genannten Funktionen der Niveauregelanlage (Überführen von Druckluft aus den Luftfedern 6a bis 6d in einen der beiden Druckmittelvorratsbehälter 12, 13; Überführen von Druckluft aus einem der beiden Druckmittelvorratsbehälter 12, 13 in die Luftfedern 6a bis 6d; Auffüllen eines der beiden Druckmittelvorratsbehälter 12, 13 mit Luft aus der Atmosphäre; Ablassen von Druckluft aus einem der beiden Druckmittelvorratsbehälter 12, 13 über den Lufttrockner 10 in die Atmosphäre) durch die Rückschlagventile 31 und 33 nicht beeinträchtigt werden.

Im Folgenden wird erläutert, wie mit Hilfe des Drucksensors 42 der Luftdruck in den Druckmittelkammern 6a bis 6d gemessen werden kann. Während der Druckmessung soll ein Luftaustausch zwischen den Druckmittelkammern 6a bis 6d und dem Druckmittelvorratsbehältern 12 und 13 möglichst vermieden werden, um ein unbeabsichtigtes Absenken bzw. Anheben des Fahrzeugaufbaus zu vermeiden. Es ist also zu vermeiden, dass während der Druckmessung Druckluft aus den Druckmittelkammern 6a bis 6d in einen der beiden Druckmittelvorratsbehälter 12 oder 13 überströmt (dies könnte passieren, wenn der Luftdruck in der zu messenden Druckmittelkammer 6a bis 6d größer ist als der Luftdruck in dem entsprechenden Druckmittelvorratsbehälter 12 oder 13). Es ist ebenfalls zu vermeiden, dass während der Druckmessung Druckluft aus einem der beiden Druckmittelvorratsbehälter 12 oder 13 in die Druckmittelkammern 6a bis 6d überströmt, deren Luftdruck gemessen wird (dies könnte passieren, wenn die Druckluft in der zu messenden Druckmittelkammern 6a bis 6d kleiner ist als in dem entsprechenden Druckmittelvorratsbehälter 12 oder 13). Da vor der Druckmessung nicht bekannt ist, ob der Luftdruck in der zu messenden Druckmittelkammer 6a bis 6d größer oder kleiner ist als in dem entsprechenden Druckmittelvorratsbehälter 12 oder 13, muss eine Stellung der steuerbaren Wegeventile 52a und 54a eingestellt werden, mit der unabhängig von den Druckverhältnissen beide möglichen Fälle wirksam unterdrückt werden. Dies wird durch die in der Figur 1 gezeigte Stellung der steuerbaren Wegeventile 52a (erste Schaltstellung) und 54a (zweite Schaltstellung) gewährleistet (wie im Folgenden ausgeführt wird), wobei das steuerbare Wegeventil 52a die erste Druckmittelleitung 1 mit dem Druckmittelvorratsbehälter 12 durchschaltet und die Druckluftleitung 4 sowie den Druckmittelvorratsbehälter 13 sperrt und das steuerbare Wegeventil 54a die dritte Druckmittelleitung 3 mit der sechsten Druckmittelleitung 6 durchschaltet und die zweite Druckmittelleitung 2 sperrt.

Im Folgenden wird die Druckmessung in einer der Druckmittelkammern 6a bis 6d beispielhaft anhand der Druckmittelkammer 6a erläutert. Zur Messung des Luftdruckes wird das steuerbare Wegeventil 26a in den zweiten Schaltzustand überführt, so dass die Druckmittelkammer 6a über das steuerbare Wegeventil 26a mit dem Drucksensor 42 verbunden ist und mit dessen Hilfe der Luftdruck gemessen werden kann. Wenn hierbei der Luftdruck in der Druckmittelkammer 6a größer ist als der Luftdruck in dem ersten Druckmittelvorratsbehälter 12, so kann trotzdem keine Druckluft von der Druckmittelkammer 6a in den ersten Druckmittelvorratsbehälter 12 überströmen. Die Luft aus der Druckmittelkammer 6a gelangt nämlich über die steuerbaren Wegeventile 26a und 54a und das Rückschlagventil 33 zu dem Rückschlagventil 31, das jedoch zu dem steuerbaren Wegeventil 52a hin sperrt. Somit gelangt die Druckluft nur bis zu dem Rückschlagventil 31, nicht jedoch bis zu dem steuerbaren Wegeventil 52a und dem ersten Druckmittelvorratsbehälter 12. Ein Überströmen von Druckluft aus der Druckmittelkammer 6a in den ersten Druckmittelvorratsbehälter 12 über einen anderen Weg ist ebenfalls nicht möglich, da die Druckluftleitungen 2 und 4 durch die steuerbaren Wegeventile 54a und 52a unterbrochen sind. Für den zweiten Druckmittelvorratsbehälter 13 gilt entsprechendes, wobei das erste Wegeventil 52a dann in die vierte Schaltstellung überführt wird.

Wenn hingegen der Luftdruck in dem ersten Druckmittelvorratsbehälter 12 größer ist als der Luftdruck in der Druckmittelkammer 6a, so ist es ebenfalls nicht möglich, dass Druckluft von diesem in die Druckmittelkammer 6a überströmt. In diesem Fall kann die Luft nämlich ausgehend von dem ersten Druckmittelvorratsbehälter 12 über das steuerbare Wegeventil 52a und das Rückschlagventil 31 nur bis zu dem Rückschlagventil 33 gelangen, das zum steuerbaren Wegeventil 54a und zur Luftfeder 6a hin sperrt. Ein Überströmen von Druckluft aus dem ersten Druckmittelvorratsbehälter 12 in die Druckmittelkammer 6a über einen anderen Weg ist ebenfalls nicht möglich, da die Druckluftleitung 4 durch das Wegeventil 52a und die Druckluftleitung 2 durch das Wegeventil 54a unterbrochen ist. Für den zweiten Druckmittelvorratsbehälter 13 gilt entsprechendes, wobei das erste Wegeventil 52a dann in die vierte Schaltstellung überführt wird.

Zur Beendigung der Druckmessung wird das steuerbare Wegeventil 26a wieder in den ersten Schaltzustand überführt. Auf entsprechende Art und Weise wird der Luftdruck in den Druckmittelkammern 6b bis 6d gemessen, wobei dann das entsprechende Wegeventil 26b bis 26d von dem in der Figur 1 gezeigten ersten Schaltzustand in den zweiten Schaltzustand überführt wird. Das erste steuerbare Wegeventil 52a in der Fig. 1 weist vier Schaltstellung auf und kann als ein Standard Niveauregelventil mit 2 beweglichen Schaltkolben und einer Betätigungseinrichtung ausgeführt sein.

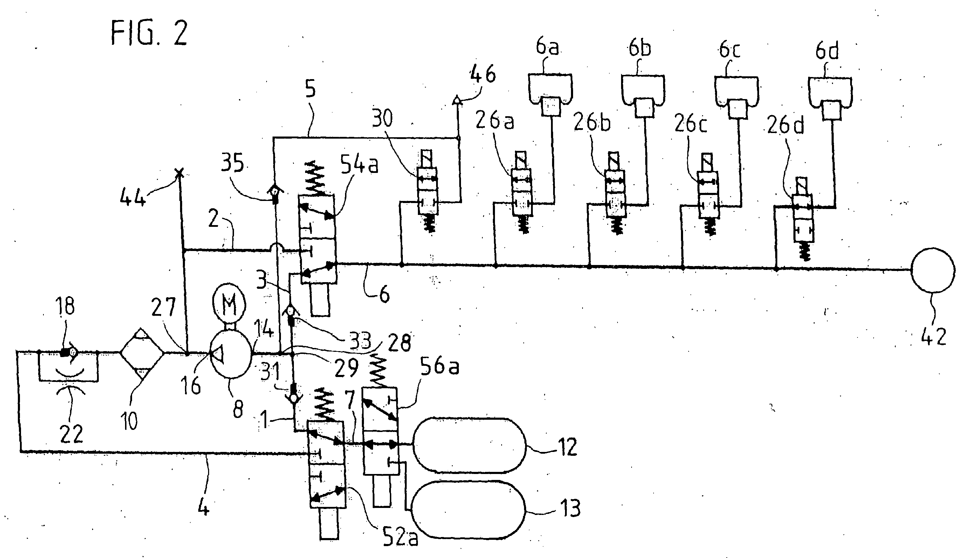

Figur 2 zeigt eine geschlossene Niveauregelanalge, die weitesgehend der in der Figur 1 gezeigten Niveauregelanlage entspricht. Funktionell betrachtet unterscheiden sich die in Figur 2 und Figur 1 gezeigten Niveauregelanlagen nicht. In der Figur 2 ist das erste steuerbare Wegeventil 52a als 3/2-Wegeventil ausgeführt, welches in einer ersten Schaltstellung die erste Druckmittelleitung 1 mit einer siebten Druckmittelleitung 7 verbindet und die vierte Druckmittelleitung 4 sperrt. In der zweiten Schaltstellung verbindet das erste steuerbare Wegeventile 52a die vierte Druckmittelleitung 4 mit der siebten Druckmittelleitung 7 und sperrt die erste Druckmittelleitung 1. Die siebte Druckmittelleitung 7 steht über ein drittes steuerbares Wegeventil 56a in einer ersten Schaltstellung mit dem zweiten Druckmittelvorratsbehälter 13 in Verbindung und sperrt eine Verbindung zum ersten Druckmittelvorratsbehälter 12. In einer zweiten Schaltstellung steht das dritte steuerbare Wegeventil 56a mit dem ersten Druckmittelvorratsbehälter 12 in Verbindung und sperrt eine Verbindung zum zweiten Druckmittelvorratsbehälter 13. Entsprechend der oben beschriebenen Schaltstellungen der beiden steuerbaren Wegeventile 52a und 56a in der Figur 2, lassen sich alle bei der Figur 1 beschriebenen Funktionen mit der Niveauregelanlage der Figur 2 darstellen.

### Bezugszeichenliste

### (ist Teil der Beschreibung)

- 1: Erste Druckmittelleitung
- 2: Zweite Druckmittelleitung
- 3: Dritte Druckmittelleitung
- 4: Vierte Druckmittelleitung
- 5: Fünfte Druckmittelleitung
- 6: Sechste Druckmittelleitung
- 7: Siebte Druckmittelleitung
- 6a-6d: Druckmittelkammer
- 8: Kompressor
- 10: Lufttrockner
- 12: Druckmittelraum bzw. Druckmittelvorratsbehälter
- 13: Druckmittelraum bzw. Druckmittelvorratsbehälter
- 14: Kompressoreingang
- 16: Kompressorausgang
- 18: Rückschlagventil
- 22: Drossel
- 26a-26d: Steuerbares Wegeventil
- 27, 28,: 29 Punkt
- 30: Steuerbares Wegeventil
- 31: Rückschlagventil
- 33: Rückschlagventil
- 35: Rückschlagventil
- 42: Drucksensor
- 44: Anschluß für externe Geräte
- 46: Lufteinlass / Luftauslass
- 52a: Erstes steuerbares Wegeventil
- 54a: Zweites steuerbares Wegeventil
- 56a: Drittes steuerbares Wegeventil

## Patentansprüche

1. Geschlossene Niveauregelanlage für Fahrzeuge, durch die ein Fahrzeugaufbau gegenüber mindestens einer Fahrzeugachse abgefedert ist, die folgende Bestandteile enthält:
- Druckmittelkammern (6a-6d)
- einen Kompressor (8)
- einem Lufttrockner (10)
- einen Druckmittelvorratsbehälter (12,13), der über den Kompressor (8) mit den Druckmittelkammern (6a-6d) derart in Verbindung steht, dass
- Druckmittel aus dem Druckmittelvorratsbehälter (12,13) über den Kompressor (8) in jede Druckmittelkammer (6a-6d) überführbar ist, wobei der Kompressoreingang (14)dann über eine erste mit einem Wegeventil (52a) durchgeschaltete Druckluftleitung (1) mit dem Druckmittelvorratsbehälter (12, 13) und der Kompressorausgang (14) dann über eine zweite mit einem Wegeventil (54a) durchgeschaltete Druckluftleitung (2) mit der Druckmittelkammer verbunden ist, und
- Druckmittel aus jeder Druckmittelkammer (6a-6d) über den Kompressor (8) in den Druckmittelvorratsbehälter (12, 13) überführbar ist, wobei der Kompressoreingang (14) dann über eine dritte mit einem Wegeventil (54a) durchgeschaltete Druckluftleitung (3) mit der Druckmittelkammer (6a-6d) und der Kompressorausgang (14) dann über eine vierte mit einem Wegeventil (52a) durchgeschaltete Druckluftleitung (4) mit dem Druckmittelvorratsbehälter (12, 13) verbunden ist, wobei
- der Lufttrockner (10) in der vierten Druckluftleitung (4) angeordnet ist,
- eine Ansaugleitung (5) vorhanden ist, die in einem Ansaugventil (46) endet und über die der Kompressoreingang (14) mit der Atmosphäre verbindbar ist,
- eine Ablassleitung (2) vorhanden ist, die von der vierten Druckluftleitung (4) in einem Punkt (27) abzweigt, der zwischen dem Kompressorausgang (16) und dem Lufttrockner (10) liegt, und die in einem Ablassventil (46) endet, so dass der Druckmittelvorratsbehälter (12, 13) über den Lufttrockner (10) und über die Ablassleitung (2) mit der Atmosphäre verbindbar ist,
- die Niveauregelanlage zumindest zwei steuerbare Wegeventile (52a, 54a) aufweist, von denen jedes zumindest zwei Schaltzustände einnehmen kann
**dadurch gekennzeichnet, dass**
der Druckmittelvorratsbehälter (12, 13) in einen ersten und einen zweiten Druckmittelraum (12, 13) unterteilt ist, welche keine direkte Verbindung aufweisen, und entweder der erste Druckmittelraum (12) oder der zweite Druckmittelraum (13) über mindestens ein gemeinsames steuerbares Wegeventil (52a) mit dem Kompressoreingang (14) oder dem Kompressorausgang (16) verbindbar ist, so dass Druckmittel aus den Druckmittelkammern (6a-6d) in den ersten oder den zweiten Druckmittelraum (12, 13) oder Druckmittel aus dem ersten oder dem zweiten Druckmittelraum (12, 13) in die Druckmittelkammern (6a-6d) überführbar ist.

2. Geschlossene Niveauregelanlage für Fahrzeuge nach Anspruch 1 **dadurch gekennzeichnet, dass**
- die Niveauregelanlage zumindest drei steuerbare Wegeventile (52a, 54a, 56a) aufweist, von denen jedes zumindest zwei Schaltzustände einnehmen kann, und dass
- die erste Druckmittelleitung (1) mit dem ersten steuerbaren Wegeventil (52a) und die zweite Druckluftleitung (2) mit dem zweiten steuerbaren Wegeventil (54a) durchgeschaltet und die vierte Druckluftleitung (4) mit dem ersten steuerbaren Wegeventil (54a) und die dritte Druckluftleitung (3) mit dem zweiten steuerbaren Wegeventil (54a) gesperrt wird, wenn Druckluft von einer der beiden Druckmittelräume (12, 13) in eine Druckmittelkammer (6a-6d) überführt werden soll, wobei sich das erste und das zweite steuerbare Wegeventil (52a, 54a) dann in einem ersten Schaltzustand befinden, und dass
- die dritte Druckluftleitung (3) mit dem zweiten steuerbaren Wegeventil (54a) und die vierte Druckluftleitung (4) mit dem ersten steuerbaren Wegeventil (52a) durchgeschaltet und die erste Druckluftleitung (1) mit dem ersten steuerbaren Wegeventil (52a) und die zweite Druckluftleitung (2) mit dem zweiten steuerbaren Wegeventil (54a) gesperrt wird, wenn Druckluft von einer Druckmittelkammer (6a-6d) in eine der beiden Druckmittelräume (12, 13) überführt werden soll, wobei sich das erste und das zweite steuerbare Wegeventil (52a, 54a) dann in einem zweiten Schaltzustand befinden,
- wobei eine Verbindung von dem ersten steuerbaren Wegeventil (52a) zu dem ersten Druckmittelraum (12) hergestellt und eine Verbindung zum zweiten Druckmittelraum (13) gesperrt wird, wenn sich das dritte Wegeventil (56a) in seinem ersten Schaltzustand befindet, und
- wobei eine Verbindung von dem ersten steuerbaren Wegeventil (52a) zu dem zweiten Druckmittelraum (13) hergestellt und eine Verbindung zum ersten Druckmittelraum (12) gesperrt wird, wenn sich das dritte Wegeventil (56a) in seinem zweiten Schaltzustand befindet.

3. Geschlossene Niveauregelanlage für Fahrzeuge nach einem oder mehreren der vorherigen Ansprüche **dadurch gekennzeichnet, dass**
- in der ersten Druckluftleitung (1) zwischen dem gemeinsamen Punkt (29) und dem ersten steuerbaren Wegeventil (52a) mit dem die erste Druckluftleitung (1) durchschaltbar ist, ein zum Kompressoreingang (14) hin öffnendes Rückschlagventil (31) liegt, und dass
- in der dritten Druckluftleitung (3) zwischen dem gemeinsamen Punkt (29) und dem zweiten steuerbaren Wegeventil (54a), mit dem die dritte Druckluftleitung (3) durchschaltbar ist, ein weiteres zum Kompressoreingang (14) hin öffnendes Rückschlagventil (33) liegt.

4. Geschlossene Niveauregelanlage für Fahrzeuge nach einem oder mehreren der vorherigen Ansprüche **dadurch gekennzeichnet, dass**
die zwei Druckmittelräume (12, 13) durch zwei separate Druckmittelvorratsbehälter (12, 13) gebildet werden.

5. Geschlossene Niveauregelanlage für Fahrzeuge nach einem oder mehreren der vorherigen Ansprüche **dadurch gekennzeichnet, dass**
die zwei Druckmittelräume (12, 13) ein unterschiedliches Druckniveau aufweisen.

6. Geschlossene Niveauregelanlage für Fahrzeuge nach einem oder mehreren der vorherigen Ansprüche **dadurch gekennzeichnet, dass**
der Druck in mindestens einem der beiden Druckmittelräume (12, 13) höher als der maximale tatsächliche Verdichtungsenddruck des Kompressors (8) ist.

7. Geschlossene Niveauregelanlage für Fahrzeuge nach einem oder mehreren der vorherigen Ansprüche **dadurch gekennzeichnet, dass**
der Druck in mindestens einem der beiden Druckmittelräume (12, 13) für Regelungen von externen Geräten (44) - insbesondere Reifenfüllvorrichtungen - verwendbar ist, und der Restdruck in dem anderen Druckmittelraum (12, 13) für eine direkt nach dem externen Regelvorgang durchzuführende Niveauänderung der Niveauregelanlage zur Verfügung steht.

8. Verfahren zur Niveauregelung von Fahrzeugen insbesondere mit einer geschlossenen Niveauregelanlage nach einem oder mehreren der vorherigen Ansprüche 1 bis 7 **dadurch gekennzeichnet, dass**
der Kompressor (8) bei der Befüllung des Druckmittelraumes (12, 13), welcher einen höheren Druck als den tatsächlichen Verdichtungsenddruck des Kompressors (8) aufweist, Druckmittel aus den Druckmittelkammern (6a-6d) in diesen Druckmittelraum (12,13) überführt.

9. Verfahren zur Niveauregelung von Fahrzeugen insbesondere mit einer geschlossenen Niveauregelanlage nach einem oder mehreren der vorherigen Ansprüche 1 bis 7 **dadurch gekennzeichnet, dass**
Druckmittel aus dem Lufttrockner (10) sequentiell in den ersten oder den zweiten Druckmittelraum (12, 13), welcher einen Druck höher als den tatsächlichen Verdichtungsenddruck des Kompressors (8) aufweist, überführbar ist, wobei der Kompressor (8) sequentiell Druckmittel aus dem zweiten oder dem ersten, nicht zu befüllenden Druckmittelraum (12, 13) ansaugt und in den Lufttrockner (10) überführt, wenn der erste oder der zweite Druckmittelraum (12, 13) nicht mit dem Lufttrockner (10) in Verbindung steht bzw. kein Druckmittel aus dem Lufttrockner (10) in den ersten oder den zweiten Druckmittelraum (12, 13) überführt wird.

## Claims

1. Closed ride level control system for vehicles by means of which a vehicle body is sprung with respect to at least one vehicle axle, said system containing the following components:
- pressure medium chambers (6a-6d)
- a compressor (8)
- an air dryer (10)
- a pressure medium reservoir vessel (12, 13) which is connected to the pressure medium chambers (6a-6d) via the compressor (8) in such a way that
- pressure medium can be transferred from the pressure medium reservoir vessel (12, 13) into each pressure medium chamber (6a-6d) via the compressor (8), wherein the compressor inlet (14) is then connected to the pressure medium reservoir vessel (12, 13) via a first compressed air line (1) connected through with a directional control valve (52a), and the compressor outlet (14) is then connected to the pressure medium chamber via a second compressed air line (2) connected through with a directional control valve (54a), and
- pressure medium can be transferred from each pressure medium chamber (6a-6d) into the pressure medium reservoir vessel (12, 13) via the compressor (8), wherein the compressor inlet (14) is then connected to the pressure medium chamber (6a-6d) via a third compressed air line (3) connected through with a directional control valve (54a), and the compressor outlet (14) is then connected to the pressure medium reservoir vessel (12, 13) via a fourth compressed air line (4) connected through with a directional control valve (52a), wherein
- the air dryer (10) is arranged in the fourth compressed air line (4),
- an intake line (5) is present which ends in an intake valve (46) and via which the compressor inlet (14) can be connected to the atmosphere,
- a blow off line (2) is present which branches off from the fourth compressed air line (4) at a point (27) which is located between the compressor outlet (16) and the air dryer (10) and which ends in a blow off valve (46) so that the pressure medium reservoir vessel (12, 13) can be connected to the atmosphere via the air dryer (10) and via the blow off line (2),
- the ride level control system has at least two controllable directional control valves (52a, 54a), each of which can assume at least two switched states,
**characterized in that** the pressure medium reservoir vessel (12, 13) is divided into a first and a second pressure medium space (12, 13) which do not have a direct connection, and either the first pressure medium space (12) or the second pressure medium space (13) can be connected to the compressor inlet (14) or the compressor outlet (16) via at least one common controllable directional control valve (52a) so that pressure medium can be transferred from the pressure medium chambers (6a-6d) into the first or second pressure medium spaces (12, 13), or pressure medium can be transferred from the first or second pressure medium spaces (12, 13) into the pressure medium chambers (6a-6d).

2. Closed ride level control system for vehicles according to Claim 1, **characterized in that**
- the ride level control system has at least three controllable directional control valves (52a, 54a, 56a), each of which can assume at least two switched states, and **in that**
- the first pressure medium line (1) is connected through with the first controllable directional control valve (52a), and the second compressed air line (2) is connected through with the second controllable directional control valve (54a), and the fourth compressed air line (4) is blocked with the first controllable directional control valve (54a), and the third compressed air line (3) is blocked with the second controllable directional control valve (54a) if compressed air is to be transferred from one of the two pressure medium spaces (12, 13) into a pressure medium chamber (6a-6d), wherein the first and the second controllable directional control valves (52a, 54a) are then in a first switched state, and **in that**
- the third compressed air line (3) is connected through with the second controllable directional control valve (54a), and the fourth compressed air line (4) is connected through with the first controllable directional control valve (52a), and the first compressed air line (1) is blocked with the first controllable directional control valve (52a), and the second compressed air line (2) is blocked with the second controllable directional control valve (54a) if compressed air is to be transferred from a pressure medium chamber (6a-6d) into one of the two pressure medium spaces (12, 13), wherein the first and second controllable directional control valves (52a, 54a) are then in a second switched state,
- wherein a connection is established from the first controllable directional control valve (52a) to the first pressure medium space (12), and a connection to the second pressure medium space (13) is blocked if the third directional control valve (56a) is in its first switched state, and
- wherein a connection is established from the first controllable directional control valve (52a) to the second pressure medium space (13), and a connection to the first pressure medium space (12) is blocked if the third directional control valve (56a) is in its second switched state.

3. Closed ride level control system for vehicles according to one or more of the preceding claims, **characterized in that**
- a non-return valve (31) which opens to the compressor inlet (14) is located in the first compressed air line (1) between the common point (29) and the first controllable directional control valve (52a) with which the first compressed air line (1) can be connected through, and **in that**
- a further non-return valve (33) which opens to the compressor inlet (14) is located in the third compressed air line (3) between the common point (29) and the second controllable directional control valve (54a) with which the third compressed air line (3) can be connected through.

4. Closed ride level control system for vehicles according to one or more of the preceding claims, **characterized in that** the two pressure medium spaces (12, 13) are formed by two separate pressure medium reservoir vessels (12, 13).

5. Closed ride level control system for vehicles according to one or more of the preceding claims, **characterized in that** the two pressure medium spaces (12, 13) have a different pressure level.

6. Closed ride level control system for vehicles according to one or more of the preceding claims, **characterized in that** the pressure in at least one of the two pressure medium spaces (12, 13) is higher than the actual maximum final compression pressure of the compressor (8).

7. Closed ride level control system for vehicles according to one or more of the preceding claims, **characterized in that** the pressure in at least one of the two pressure medium spaces (12, 13) can be used for controllers of external devices (44), in particular tyre inflation devices, and the residual pressure in the other pressure medium space (12, 13) is available for a ride level change of the ride level control system which is to be carried out directly after the external control process.

8. Method for controlling the ride level of vehicles, in particular with a closed ride level control system according to one or more of the preceding Claims 1 to 7, **characterized in that** when the pressure medium space (12, 13) which has a higher pressure than the actual final compression pressure of the compressor (8) is inflated, the compressor (8) transfers pressure medium from the pressure medium chambers (6a-6d) into this pressure medium space (12, 13).

9. Method for controlling the ride level of vehicles, in particular with a closed ride level control system according to one or more of the preceding Claims 1 to 7, **characterized in that** pressure medium can be transferred sequentially from the air dryer (10) into the first or second pressure medium space (12, 13) which has a higher pressure than the actual final compression pressure of the compressor (8), wherein the compressor (8) sucks in pressure medium sequentially from the second or first pressure medium space (12, 13) which is not to be inflated and transfers it into the air dryer (10) if the first or second pressure medium space (12, 13) is not connected to the air dryer (10), or no pressure medium is transferred from the air dryer (10) into the first or second pressure medium space (12, 13).

## Revendications

1. Équipement de réglage de niveau fermé pour véhicules automobiles, par le biais duquel une carrosserie de véhicule est suspendue par rapport à au moins un essieu de véhicule, comprenant les composants suivants :
- des chambres à fluide sous pression (6a - 6d)
- un compresseur (8)
- un dessiccateur d'air (10)
- un réservoir de fluide sous pression (12, 13) qui est en liaison par le biais du compresseur (8) avec les chambres à fluide sous pression (6a - 6d) de telle sorte que
- le fluide sous pression peut être transféré du réservoir de fluide sous pression (12, 13) dans chaque chambres à fluide sous pression (6a - 6d) par le biais du compresseur (8), l'entrée du compresseur (14) étant alors reliée avec le réservoir de fluide sous pression (12, 13) par le biais d'une première conduite d'air comprimé (1) rendue passante par un distributeur (52a) et la sortie du compresseur (14) avec la chambre à fluide sous pression par le biais d'une deuxième conduite d'air comprimé (2) rendue passante par un distributeur (54a), et
- le fluide sous pression peut être transféré de chaque chambre à fluide sous pression (6a - 6d) dans le réservoir de fluide sous pression (12, 13) par le biais du compresseur (8), l'entrée du compresseur (14) étant alors reliée avec les chambres à fluide sous pression (6a - 6d) par le biais d'une troisième conduite d'air comprimé (3) rendue passante par un distributeur (54a) et la sortie du compresseur (14) avec le réservoir de fluide sous pression (12, 13) par le biais d'une quatrième conduite d'air comprimé (4) rendue passante par un distributeur (52a),
- le dessiccateur d'air (10) étant disposé dans la quatrième conduite d'air comprimé (4),
- une conduite d'aspiration (5) étant présente, laquelle se termine dans une vanne d'aspiration (46) et par le biais de laquelle l'entrée du compresseur (14) peut être reliée avec l'atmosphère,
- une conduite d'échappement (2) étant présente, laquelle est dérivée de la quatrième conduite d'air comprimé (4) en un point (27) qui se trouve entre la sortie du compresseur (16) et le dessiccateur d'air (10) et se termine dans une vanne d'échappement (46) de sorte que le réservoir de fluide sous pression (12, 13) peut être relié avec l'atmosphère par le biais du dessiccateur d'air (10) et par le biais de la conduite d'échappement (2),
- l'équipement de réglage de niveau présentant au moins deux distributeurs commandables (52a, 54a) dont chacun peut adopter au moins deux positions de commutation,
**caractérisé en ce que** le réservoir de fluide sous pression (12, 13) est divisé en un premier et un deuxième espaces de fluide sous pression (12, 13) qui ne présentent pas de liaison directe et soit le premier espace de fluide sous pression (12), soit le deuxième espace de fluide sous pression (13) peut être relié avec l'entrée du compresseur (14) ou la sortie du compresseur (16) par le biais d'au moins un distributeur commandable (52a) commun de sorte que le fluide sous pression puisse être transféré des chambres à fluide sous pression (6a - 6d) dans le premier ou le deuxième espace de fluide sous pression (12, 13) ou que le fluide sous pression puisse être transféré du premier ou du deuxième espace de fluide sous pression (12, 13) dans les chambres à fluide sous pression (6a - 6d).

2. Équipement de réglage de niveau fermé pour véhicules automobiles selon la revendication 1, **caractérisé en ce que**
- l'équipement de réglage de niveau présente au moins trois distributeurs commandables (52a, 54a, 56a) dont chacun peut adopter au moins deux positions de commutation et **en ce que**
- la première conduite d'air comprimé (1) est rendue passante par le premier distributeur commandable (52a) et la deuxième conduite d'air comprimé (2) est rendue passante par le deuxième distributeur commandable (54a) et la quatrième conduite d'air comprimé (4) est fermée par le premier distributeur commandable (54a) et la troisième conduite d'air comprimé (3) est fermée par le deuxième distributeur commandable (54a) lorsqu'il faut transférer l'air comprimé de l'un des deux espaces de fluide sous pression (12, 13) dans une chambre à fluide sous pression (6a - 6d), le premier et le deuxième distributeurs commandables (52a, 54a) se trouvant alors dans une première position de commutation, et **en ce que**
- la troisième conduite d'air comprimé (3) est rendue passante par le deuxième distributeur commandable (54a) et la quatrième conduite d'air comprimé (4) est rendue passante par le premier distributeur commandable (52a) et la première conduite d'air comprimé (1) est fermée par le premier distributeur commandable (52a) et la deuxième conduite d'air comprimé (2) est fermée par le deuxième distributeur commandable (54a) lorsqu'il faut transférer l'air comprimé d'une chambre à fluide sous pression (6a - 6d) dans l'un des deux espaces de fluide sous pression (12, 13), le premier et le deuxième distributeurs commandables (52a, 54a) se trouvant alors dans une deuxième position de commutation,
- une liaison du premier distributeur commandable (52a) vers le premier espace de fluide sous pression (12) étant établie et une liaison vers le deuxième espace de fluide sous pression (13) étant fermée lorsque le troisième distributeur (56a) se trouve dans sa première position de commutation et
- une liaison du premier distributeur commandable (52a) vers le deuxième espace de fluide sous pression (13) étant établie et une liaison vers le premier espace de fluide sous pression (12) étant fermée lorsque le troisième distributeur (56a) se trouve dans sa deuxième position de commutation.

3. Équipement de réglage de niveau fermé pour véhicules automobiles selon une ou plusieurs des revendications précédentes, **caractérisé en ce**
- **qu'**un clapet anti-retour (31) qui s'ouvre en direction de l'entrée du compresseur (14) se trouve dans la première conduite d'air comprimé (1) entre le point commun (29) et le premier distributeur commandable (52a) avec lequel la première conduite d'air comprimé (1) peut être rendue passante, et
- en ce qu'un autre clapet anti-retour (33) qui s'ouvre en direction de l'entrée du compresseur (14) se trouve dans la troisième conduite d'air comprimé (3) entre le point commun (29) et le deuxième distributeur commandable (54a) avec lequel la troisième conduite d'air comprimé (3) peut être rendue passante.

4. Équipement de réglage de niveau fermé pour véhicules automobiles selon une ou plusieurs des revendications précédentes, **caractérisé en ce que** les deux espaces de fluide sous pression (12, 13) sont formés par deux réservoirs de fluide sous pression (12, 13) séparés.

5. Équipement de réglage de niveau fermé pour véhicules automobiles selon une ou plusieurs des revendications précédentes, **caractérisé en ce que** les deux espaces de fluide sous pression (12, 13) présentent des niveaux de pression différents.

6. Équipement de réglage de niveau fermé pour véhicules automobiles selon une ou plusieurs des revendications précédentes, **caractérisé en ce que** la pression dans au moins l'un des deux espaces de fluide sous pression (12, 13) est supérieure à la pression finale de compression réelle maximale du compresseur (8) .

7. Équipement de réglage de niveau fermé pour véhicules automobiles selon une ou plusieurs des revendications précédentes, **caractérisé en ce que** la pression dans au moins l'un des deux espaces de fluide sous pression (12, 13) peut être utilisée pour la régulation d'appareils externes (44), notamment des dispositifs de gonflage de pneus, et la pression restante dans l'autre espace de fluide sous pression (12, 13) est à la disposition de l'équipement de réglage de niveau pour un changement de niveau à effectuer directement après l'opération de régulation externe.

8. Procédé de réglage de niveau de véhicules automobiles, notamment avec un équipement de réglage de niveau fermé selon une ou plusieurs des revendications 1 à 7, **caractérisé en ce que**, lors du remplissage de l'espace de fluide sous pression (12, 13) qui présente une pression supérieure à la pression finale de compression réelle du compresseur (8), ce dernier transfère le liquide sous pression des chambres à fluide sous pression (6a-6d) à l'espace de fluide sous pression (12, 13) en question.

9. Procédé de réglage du niveau de véhicules automobiles, notamment avec un équipement de réglage de niveau fermé selon une ou plusieurs des revendications 1 à 7, **caractérisé en ce que** le fluide sous pression peut être transféré de manière séquentielle du dessiccateur d'air (10) dans le premier ou le deuxième espace de fluide sous pression (12, 13), lequel présente une pression supérieure à la pression finale de compression réelle du compresseur (8), le compresseur (8) aspirant séquentiellement le fluide sous pression du deuxième ou du premier espace de fluide sous pression (12, 13) qui n'est pas à remplir et le transférant dans le dessiccateur d'air (10) lorsque le premier ou le deuxième espace de fluide sous pression (12, 13) n'est pas relié au dessiccateur d'air (10) ou lorsque le fluide sous pression n'est pas transféré du dessiccateur d'air (10) dans le premier ou le deuxième espace de fluide sous pression (12, 13).
